# EUROPEAN PATENT SPECIFICATION

(11) **EP 4 110 069 B1**
(45) Date of publication and mention of the grant of the patent: **11.02.2026**
(21) Application number: 21710059.3
(22) Date of filing: 17.02.2021
(51) Int. Cl.: A23G 3/34, A23G 3/48, A23G 3/54, A23L 25/00, A23P 30/10

(54) **METHOD FOR PREPARING A CONFECTIONERY PRODUCT**
VERFAHREN ZUR HERSTELLUNG EINES SÜSSWARENPRODUKTS
PROCÉDÉ DE PRÉPARATION D'UN PRODUIT DE CONFISERIE

(30) Priority: 27.02.2020 IT 202000004033
(43) Date of publication of application: 04.01.2023
(73) Proprietor: Biagiotti, Antonio, 61032 Fano (Pesaro Urbino) (IT)
(72) Inventor: Biagiotti, Antonio, 61032 Fano (Pesaro Urbino) (IT)
(74) Representative: Zermani Biondi Orsi, Umberto
(86) International application number: PCT/IB2021/051327
(87) International publication number: WO 2021/171140

(56) References cited:
- EP-A1- 2 782 457
- WO-A2-02/071856
- FR-A1- 2 675 344
- FR-A1- 2 833 140
- GB-A- 1 403 696
- UNKNOWN: "Croccante", 26 November 2017 (2017-11-26), XP002800817, Retrieved from the Internet <URL:https://web.archive.org/web/20171126054503/https://ricette.giallozafferano.it/Croccante.html> [retrieved on 20201023]
- UNKNOWN: "Croccante", 11 April 2018 (2018-04-11), XP002800818, Retrieved from the Internet <URL:https://web.archive.org/web/20180411165624/https://ricette.giallozafferano.it/Croccante.html> [retrieved on 20201023]

## Description

The present invention relates to a method for preparing a confectionery product based on nuts and sugar. In a preferred embodiment, the present invention relates to a method for preparing a typical dessert commonly called "brittle" which stands out precisely for its particularly solid and crunchy consistency during its consumption.

Confectionery products are known in the food industry, such as, for example, brittle or other traditional sweets, with a very solid and thin structure, made from a dough based on melted sugar and nuts such as almonds, walnuts or hazelnuts.

Such products generally include mixing sugar and nuts, plus any other flavourings chosen according to the specific recipe. The mixture is brought to a high temperature to obtain the melting of the sugar and therefore to be able to homogeneously embed the solid products (nuts) in the sugar in semi-liquid form.

The mixture of melted sugar and nuts thus obtained is then spread on special flat supports in order to facilitate the cooling of the compound. Once cooled, the hardened sugar gives the product its typical compact structure which has a substantially flat shape. The document XP002800817 discloses a method of preparation of "croccante".

In fact, as specified above, to promote the cooling action, the compound is spread on flat surfaces when still hot and in semi-liquid form so as not to thicken the mass of the product and therefore accelerate the cooling action.

Furthermore, the concentration of nuts in the melted sugar base is thereby homogeneously distributed.

For this purpose, flat surfaces are favoured such as trays or other surfaces made for example of stone or other material particularly suitable for heat absorption.

However, the cooling action necessary to obtain the product in its solid structure without compromising the organoleptic characteristics of the product has some limitations and can be improved in several aspects.

In particular, the Applicant has found that the cooling action of the brittle includes significant constraints to making shapes other than the typical flat shape.

In fact, as specified above, in order to provide for a rapid and homogeneous thickening of the melted sugar, the still-hot product is necessarily spread, thus giving the typical flat shape to the finished product.

Therefore, it is impossible to use suitably shaped moulds to confer alternative shapes, in particular shapes with three-dimensional extension.

In fact, in this case the presence of masses of material not properly spread on the cooling surface would tend to agglomerate the melted product, making homogeneous cooling difficult and therefore the correct thickening of the finished product.

However, the presence of masses of melted sugar would make it difficult to distribute the nuts or other materials in solid form embedded in the product in the fluid phase.

The object of the present invention is therefore to provide a method for preparing a confectionery product which is able to obtain products of any shape.

In particular, an object of the present invention is to provide a method for preparing a confectionery product, in particular a brittle, which is usable to confer a non-planar shape and therefore provided with any shape and thickness without altering the organoleptic characteristics of the product itself.

Finally, an object of the present invention is also to provide a method for preparing a confectionery product which is simple and quick to make, free from drawbacks derived from the need to spread the product to provide for its cooling.

The present invention, which is defined in the appended claims, relates to a method for preparing a confectionery product which comprises the steps of:
- making a dough by mixing melted sugar with a granular compound based on previously toasted nuts;
- adding also a predetermined quantity of whole and previously toasted nuts to the dough;
- cooking the dough up to a limit temperature between 160 °C and 180 °C;
- arranging a mould defining a specific three-dimensional shape with an inner cavity previously treated;
- distributing the dough inside said mould cavity after the cooking step;
- subsequently inserting the mould in a water container having a temperature lower than the temperature of the mould in order to cool the dough; and
- then removing the dough in a solid form from the mould, wherein the inner cavity is previously treated by distributing olive oil over the entire surface defining said inner cavity; and wherein said step of inserting the mould into the water container further comprises the steps of: - removing the water upon the heating thereof; - replacing the heated water with colder water with respect to the mould temperature; and subsequently - keeping the mould in the container for a period between 25 and 35 minutes.

In greater detail, the above method is preferably used for preparing a brittle or similar product.

In fact, it should be specified that the present invention finds particular application for the preparation of the typical sweet known as "brittle" based on sugar and nuts.

More specifically, the nuts are previously toasted by partial cooking. Purely by way of non-limiting example, the nuts used consist of shelled almonds.

The compound in granular or powdery form is preferably obtained by grinding the previously toasted almonds with the flavedo of an orange.

The mixture is then made by cooking the sugar and the previously prepared compound for a period of 4 to 5 minutes and up to a temperature between 79 °C and 83 °C. The cooking step occurs by continuously mixing the mixture to obtain a heterogeneous mixture.

Subsequently, the step of adding another quantity of whole and previously toasted almonds to the dough is carried out. Such a dough is then preferably cooked up to the aforementioned limit temperature.

The dough is then removed from the heat and an alcoholic liquid product, preferably a liqueur, is added. The mixture and the liquid product are then mixed for a period of 1 to 2 minutes with the consequent cooking off and at least partial evaporation of the liquid product.

The step of preparing the mould is implemented by selecting the three-dimensional shape to be conferred to the finished product. Once the mould is selected, it is treated by distributing a layer of olive oil on the entire surface defining the inner cavity. Such a layer of oil prevents the dough from adhering to the mould and promotes the removal of the product once cooled.

At the end of cooking the dough, the same is distributed by filling the entire mould cavity homogeneously. Such an action is carried out by relatively moving the dough and the mould in order to completely fill the entire cavity. In addition, by using a lemon, the part of the surface of the cavity which has remained uncovered is also homogeneously covered.

The mould thus filled with the still-hot dough (in semi-liquid form) is then cooled to obtain the finished product. In this situation, the step of inserting the mould into the water container further comprises a sub-step of replacing the water while always keeping the same at a predefined cooling temperature.

That is, once the mould is inserted in the container, the water contained therein absorbs the heat of the mould, allowing a first cooling step.

Thereafter, the water (which by absorbing the heat has heated) is removed and replaced with water at a colder temperature than that of the mould. The replacement water always has the same temperature below the mould temperature in order to allow the heat exchange.

Such a water replacement action is implemented a number of times depending on the temperature of the mould and its ability to transfer heat to the cooling water.

The mould is then kept in the container filled with cold water for 25 to 35 minutes.

At the end of this period the mould is then removed from the container and left to rest in a temperature-controlled environment for 16 to 18 hours. In this situation, the mould is kept in a cold temperature environment (colder than the temperature of the dough and mould), preferably covered with aluminium foil.

At the end of this rest period, the dough at room temperature and thus in solid form is removed from the mould, shaping the finished product and depicting the configuration conferred by the mould.

If necessary, the finished product can also be garnished as desired, depending on the specific recipe.

The method described above therefore solves the drawbacks of the prior art.

In fact, the sequence of steps, in particular related to the cooling operations, allows to insert the dough in a mould and solidify it therein, creating any three-dimensional shape alternative to the well-known flat shape of brittle.

In this context, the product which does not have a planar shape, and therefore tends to retain heat, is forced into its cooling action in order to reach a solidification temperature in very short times. Such rapid cooling becomes essential because, in the liquid phase, solid products such as nuts tend to agglomerate on the bottom. Instead, by implementing the cooling as specified above and in very short times, it is possible to solidify the product by keeping the solid products homogeneously distributed in the dough.

Consequently, the finished product results as a homogeneous structure in which the nuts are evenly distributed throughout the finished product.

Finally, the method described above is particularly practical and fast, applicable at an industrial level without therefore aggravating the costs and times of making the aforementioned confectionery product.

## Claims

1. Method for preparing a confectionery product, comprising the steps of:
- making a dough by mixing melted sugar with a granular compound based on previously toasted nuts;
- adding also a predetermined quantity of whole and previously toasted nuts to the dough;
- cooking the dough up to a limit temperature between 160 °C and 180 °C;
- arranging a mould defining a specific three-dimensional shape with an inner cavity previously treated;
- distributing the dough inside said mould cavity after the cooking step;
- subsequently inserting the mould in a water container having a temperature lower than the temperature of the mould in order to cool the dough; and
- then removing the dough in a solid form from the mould, **characterized in that** the inner cavity is previously treated by distributing olive oil over the entire surface defining said inner cavity;
and **in that** said step of inserting the mould into the water container further comprises the steps of:
- removing the water upon the heating thereof;
- replacing the heated water with colder water with respect to the mould temperature; and subsequently
- keeping the mould in the container for a period between 25 and 35 minutes.

2. Method according to the preceding claim, **characterized in that** said granular compound is obtained by grinding orange flavedo with the nuts.

3. Method according to any one of the preceding claims, **characterized in that** said step of making the dough comprises the sub-steps of cooking sugar and the compound for a time between 4 and 5 minutes up to a temperature between 79 °C and 83 °C.

4. Method according to any one of the preceding claims, **characterized in that** it comprises, after the step of cooking the dough, the step of adding an alcoholic liquid product to the dough and mixing the dough and the liquid product for a period between 1 and 2 minutes.

5. Method according to any one of the preceding claims, **characterized in that** said step of distributing the dough is carried out by homogeneously filling the entire cavity of said mould while respectively moving the dough and the mould.

6. Method according to the preceding claim, **characterized in that**, prior to the step of removing the solid dough, it comprises the step of removing the mould from the container and leaving it for a period between 16 and 18 hours resting in a controlled temperature environment.

## Patentansprüche

1. Verfahren zur Herstellung eines Süßwarenprodukts, umfassend die Schritte:
- Zubereiten eines Teigs durch Mischen von geschmolzenem Zucker mit einer körnigen Verbindung auf der Grundlage zuvor gerösteter Nüsse;
- Hinzufügen einer vorbestimmten Menge ganzer und zuvor gerösteter Nüsse zum Teig;
- Kochen des Teigs bis zu einer Grenztemperatur zwischen 160 °C und 180 °C;
- Anordnen einer Form, die eine bestimmte dreidimensionale Gestalt mit einem zuvor behandelten Innenhohlraum definiert;
- Verteilen des Teigs in dem Formhohlraum nach dem Kochschritt;
- anschließendes Einsetzen der Form in einen Wasserbehälter mit einer Temperatur, die niedriger als die Temperatur der Form ist, um den Teig abzukühlen; und
- dann Entfernen des Teigs in fester Form aus der Form, **dadurch gekennzeichnet, dass** der Innenhohlraum zuvor durch Verteilen von Olivenöl über die gesamte Oberfläche, die den Innenhohlraum definiert, behandelt wird;
und dadurch, dass der Schritt zum Einsetzen der Form in den Wasserbehälter ferner die folgenden Schritte umfasst:
- Entfernen des Wassers beim Erhitzen davon;
- Ersetzen des erwärmten Wassers durch kälteres Wasser in Bezug auf die Formtemperatur; und anschließend
- Aufbewahren der Form im Behälter für einen Zeitraum zwischen 25 und 35 Minuten.

2. Verfahren nach dem vorhergehenden Anspruch, **dadurch gekennzeichnet, dass** die körnige Verbindung durch Mahlen von Orangenflavedo mit den Nüssen erhalten wird.

3. Verfahren nach einem der vorhergehenden Ansprüche, **dadurch gekennzeichnet, dass** der Schritt zum Zubereiten des Teigs die Teilschritte zum Kochen von Zucker und der Verbindung für eine Zeit zwischen 4 und 5 Minuten bis zu einer Temperatur zwischen 79 °C und 83 °C umfasst.

4. Verfahren nach einem der vorhergehenden Ansprüche, **dadurch gekennzeichnet, dass** es nach dem Schritt zum Kochen des Teigs den Schritt zum Hinzufügen eines alkoholischen flüssigen Produkts zu dem Teig und zum Mischen des Teigs und des flüssigen Produkts für einen Zeitraum zwischen 1 und 2 Minuten umfasst.

5. Verfahren nach einem der vorhergehenden Ansprüche, **dadurch gekennzeichnet, dass** der Schritt zum Verteilen des Teigs durch homogenes Füllen des gesamten Hohlraums der Form durchgeführt wird, während der Teig bzw. die Form bewegt werden.

6. Verfahren nach dem vorhergehenden Anspruch, **dadurch gekennzeichnet, dass** es vor dem Schritt zum Entfernen des festen Teigs den Schritt zum Entfernen der Form aus dem Behälter umfasst und deren Ruhen für einen Zeitraum zwischen 16 und 18 Stunden in einer kontrollierten Temperaturumgebung.

## Revendications

1. Procédé de préparation d'un produit de confiserie, comprenant les étapes de :
- faire une pâte en mélangeant du sucre fondu avec un composé granulaire à base de noix préalablement grillées ;
- ajouter également une quantité prédéterminée de noix entières et préalablement grillées à la pâte ;
- cuire la pâte jusqu'à une température limite comprise entre 160 °C et 180 °C ;
- disposer un moule définissant une forme tridimensionnelle spécifique avec une cavité interne préalablement traitée ;
- répartir la pâte à l'intérieur de ladite cavité du moule après l'étape de cuire ;
- insérer ensuite le moule dans un récipient d'eau ayant une température inférieure à la température du moule afin de refroidir la pâte ; et
- puis retirer la pâte sous une forme solide du moule, **caractérisé en ce que** la cavité interne est préalablement traitée par distribution d'huile d'olive sur toute la surface définissant ladite cavité interne ;
et **en ce que** ladite étape d'insérer le moule dans le récipient d'eau comprend en outre les étapes de :
- retirer l'eau lors du chauffage de celle-ci ;
- remplacer l'eau chauffée par de l'eau plus froide par rapport à la température du moule ; et ensuite
- maintenir le moule dans le récipient pendant une durée comprise entre 25 et 35 minutes.

2. Procédé selon la revendication précédente, **caractérisé en ce que** ledit composé granulaire est obtenu par broyage de flavédo d'orange avec les noix.

3. Procédé selon l'une quelconque des revendications précédentes, **caractérisé en ce que** ladite étape de faire la pâte comprend les sous-étapes de cuire le sucre et le composé pendant une durée comprise entre 4 et 5 minutes jusqu'à une température comprise entre 79 °C et 83 °C.

4. Procédé selon l'une quelconque des revendications précédentes, **caractérisé en ce qu'**il comprend, après l'étape de cuire la pâte, l'étape d'ajouter un produit liquide alcoolisé à la pâte et de mélanger la pâte et le produit liquide pendant une durée comprise entre 1 et 2 minutes.

5. Procédé selon l'une quelconque des revendications précédentes, **caractérisé en ce que** ladite étape de distribuer la pâte est réalisée en remplissant de manière homogène toute la cavité dudit moule tout en déplaçant respectivement la pâte et le moule.

6. Procédé selon la revendication précédente, **caractérisé en ce que**, avant l'étape de retirer la pâte solide, il comprend l'étape de retirer le moule du récipient et de le laisser reposer pendant une période comprise entre 16 et 18 heures dans un environnement à température contrôlée.
